# EUROPÄISCHE PATENTSCHRIFT

(11) **EP 3 722 899 B1**
(45) Veröffentlichungstag und Bekanntmachung des Hinweises auf die Patenterteilung: **07.12.2022**
(21) Anmeldenummer: 19168778.9
(22) Anmeldetag: 11.04.2019
(51) Int. Cl.: G05B 19/418

(54) **VERFAHREN UND VORRICHTUNG ZUR STEUERUNG EINES TECHNISCHEN GERÄTS**
METHOD OF AND APPARATUS FOR CONTROLLING A TECHNICAL DEVICE
PROCÉDÉ ET DISPOSITIF DE COMMANDE D'UN APPAREIL TECHNIQUE

(43) Veröffentlichungstag der Anmeldung: 14.10.2020
(73) Patentinhaber: ETM professional control GmbH, 7000 Eisenstadt (AT)
(72) Erfinder: Högerl, Daniel, 7053 Hornstein (AT)
(74) Vertreter: Maier, Daniel Oliver

(56) Entgegenhaltungen:
- DE-A1-102005 063 053
- DE-A1-102009 045 386
- DE-A1-102010 029 952

## Beschreibung

Die Erfindung betrifft ein Verfahren und eine Vorrichtung zur Steuerung eines technischen Geräts, welches über ein Netzwerk mit einer Steuervorrichtung verbunden ist, wobei über das Netzwerk Anwendungsdaten zur Steuerung des technischen Geräts und weiterer Datenkommunikationseinrichtungen in Form von Datenverkehr übertragen wird.

Unter Supervisory Control and Data Acquisition (SCADA) versteht man das Überwachen und Steuern technischer Prozesse mittels eines Computer-Systems. Solche SCADA Systeme, wie SIMATIC WinCC OA, werden häufig in geographisch weit verteilten Projekten eingesetzt. Ein WinCC OA System setzt sich dabei typischerweise aus einzelnen Prozessen (Managern, Treibern) zusammen. Die Kommunikation der Prozesse untereinander, aber auch mit externen Schnittstellen erfolgt dabei oft mittels TCP- oder UDP-Protokoll.

Bei verteilten Systemen ist häufig die Qualität des Übertragungsnetzes ein wichtiges Kriterium beispielsweise für die Funktionalität oder Effizienz des Gesamtsystems, aber auch für Systemsicherheit, Ausfallsicherheit sowie Wartungsaufgaben.

Derzeit können SCADA-Anwendungen nicht immer auf einfache Weise eine Qualität des Übertragungsnetzes angeben oder vorgeben, was zu Betriebsunsicherheiten führen kann.

In der Veröffentlichung DE 10 2009 045386 A1 ist ein Verfahren zum Betreiben eines Feldbus-Interface, das an einem Feldbus der Prozessautomatisierungstechnik angeschlossen ist, gezeigt. Im Verfahren wird kontinuierlich der Datenverkehr auf dem Feldbus abgehört, dann bedarfsabhängig eine aktive Kommunikation durch das Feldbus-Interface, parallel zu dem Abhören des Datenverkehrs durchgeführt und mitgehörte Informationen durch das Feldbus-Interface erfasst, welche das Netzwerkmanagement des Feldbusses betreffen.

Es ist Aufgabe der Erfindung den Datenverkehr von Anwendungsdaten bei der Steuerung von Geräten zu verbessern.

Unter Datenverkehr von Anwendungsdaten wird beispielsweise die Kommunikation zwischen Systemeinheiten und einzelnen Geräten, wie IoT- oder IIot-Geräten in Form von übertragenen Datenpaketen verstanden, welche beispielsweise mittels TCP-IP oder UDP-Protokoll über das world-wide-web oder einer lokalen LAN-Umgebung via Client-Server Anwendungen oder cloudcomputing übertragen werden.

Die Datenpakete können beispielsweise Steuerinstruktionen, Sensordaten oder sonstige Nutzerdaten oder Nutzerparameter aufweisen.

Die Aufgabe wird durch ein Verfahren eingangs genannter Art gelöst, indem der Datenverkehr mittels zumindest einem Datenverkehrs-Parameter über einen vorgegebenen Beobachtungszeitraum von einer Überwachungsvorrichtung erfasst wird und der Steuervorrichtung bereitgestellt wird, und aus dem zumindest einen Datenverkehrs-Parameter zumindest ein Kommunikations-Parameter von der Steuervorrichtung festgelegt wird, und das technische Gerät unter Verwendung des zumindest einen Kommunikations-Parameters gesteuert wird.

Dadurch wird auf eine einfache Weise erreicht, dass das technische Gerät in Abhängigkeit des Datenverkehrs angesteuert wird und dabei die Qualität des Netzwerks berücksichtigt wird.

In einer Weiterbildung der Erfindung ist es vorgesehen, dass der zumindest eine Datenverkehrs-Parameter die minimale, die mittlere oder die maximale Übertragungsrate ist.

Dadurch wird erreicht, dass die Steuerung des technischen Geräts die verfügbare Übertragungsrate des Netzwerks berücksichtigt.

In einer Weiterbildung der Erfindung ist es vorgesehen, dass der zumindest eine Datenverkehrs-Parameter die minimale, die mittlere oder die maximale Latenzzeit ist.

Dadurch wird erreicht, dass die Steuerung des technischen Geräts die Latenzzeit des Netzwerks berücksichtigt.

In einer Weiterbildung der Erfindung ist es vorgesehen, dass vor dem Übertragen der Anwendungsdaten zur Steuerung des technischen Geräts ein Ausführungszeitpunkt und/oder eine Ausführungsdauer ermittelt werden, und aus dem Ausführungszeitpunkt und/oder der Ausführungsdauer der Startzeitpunkt und/oder die Dauer des Beobachtungszeitraums unter Anwendung des Prinzips des maschinellen Lernens ermittelt wird.

Dadurch wird erreicht, dass die Steuerung des technischen Geräts die zeitabhängige Verfügbarkeit des Netzwerks berücksichtigt. Unter Einsatz des maschinellen Lernens können Zeitpunkte und/oder Zeitperioden ermittelt, d.h. prognostiziert werden, welche für die geplante auszuführende Steuerung des technischen Geräts vergleichsweise nahekommt.

In einer Weiterbildung der Erfindung ist es vorgesehen, dass der zumindest eine Kommunikations-Parameter ein Prioritäts-Indikator für die Priorität des Datenpakets bei der Übertragung oder ein Protokoll-Indikator für die Art des Protokolls des Datenpakets bei der Übertragung, vorzugsweise TCP oder UDP, ist.

Dadurch wird erreicht, dass die Steuerung des technischen Geräts eine Priorisierung von einzelnen Daten oder Datenpaketen im Netzwerk berücksichtigt.

In einer Weiterbildung der Erfindung ist es vorgesehen, dass der zumindest eine Kommunikations-Parameter eine Verschlüsselung des Datenpakets bei der Übertragung bewirkt.

Dadurch wird erreicht, dass die Steuerung des technischen Geräts eine Verschlüsselung von einzelnen Daten oder Datenpaketen im Netzwerk berücksichtigt.

Die Aufgabe wird auch durch eine Vorrichtung eingangs genannter Art gelöst, indem die Vorrichtung zur Steuerung eines technischen Geräts ferner eine Überwachungsvorrichtung umfasst, wobei das Netzwerk dazu eingerichtet ist, Anwendungsdaten zur Steuerung des technischen Geräts und weiterer Datenkommunikationseinrichtungen in Form von Datenverkehr zu übertragen, und die Überwachungsvorrichtung dazu eingerichtet ist, den Datenverkehr mittels zumindest einem Datenverkehrs-Parameter über einen vorgegebenen Beobachtungszeitraum zu erfassen und der Steuervorrichtung bereitzustellen, und die Steuervorrichtung dazu eingerichtet ist, aus dem zumindest einen Datenverkehrs-Parameter zumindest einen Kommunikations-Parameter festzulegen, sowie das Verfahren nach einem der vorhergehenden Ansprüche auszuführen und das technische Gerät unter Verwendung des zumindest einen Kommunikations-Parameters zu steuern.

In einer Weiterbildung der Erfindung ist es vorgesehen, dass das Netzwerk ein LAN oder ein WAN ist.

In einer Weiterbildung der Erfindung ist es vorgesehen, dass das technische Gerät und die weiteren Datenkommunikationseinrichtungen IoT-Geräte (Internet of Things) oder IIoT-Geräte (Industrial IoT) sind.

Die ausgeführten Weiterbildungen der Erfindung sind untereinander kombinierbar.

Die Erfindung wird nachfolgend anhand eines in der beigeschlossenen Figur dargestellten Ausführungsbeispiels näher erläutert, welches schematisch ein erfindungsgemäßes SCADA-System zeigt.

Eine Vorrichtung zur Steuerung eines technischen Geräts 10 ist über ein Netzwerk 20, beispielsweise LAN oder ein WAN, mit einer Steuervorrichtung 30 verbunden.

Das technische Gerät 10 und weitere Datenkommunikationseinrichtungen 11-13 sind beispielsweise IoT-Geräte oder IIoT-Geräte.

Das Netzwerk 20 ist dazu eingerichtet, Anwendungsdaten 21-24 zur Steuerung des technischen Geräts 10 und weiterer Datenkommunikationseinrichtungen 11-13 in Form von Datenverkehr 25 zu übertragen.

Die Überwachungsvorrichtung 40 ist dazu eingerichtet, den Datenverkehr 25 mittels zumindest einem Datenverkehrs-Parameter 41 über einen vorgegebenen Beobachtungszeitraum zu erfassen und der Steuervorrichtung 30 bereitzustellen.

Die Steuervorrichtung 30 ist dazu eingerichtet, aus dem zumindest einen Datenverkehrs-Parameter 41 zumindest einen Kommunikations-Parameter festzulegen.

Der Datenverkehr 25 wird von einer Überwachungsvorrichtung 40 mittels dem zumindest einen Datenverkehrs-Parameter 41 über einen vorgegebenen Beobachtungszeitraum erfasst und der Steuervorrichtung 30 bereitgestellt.

Aus dem zumindest einen Datenverkehrs-Parameter 41 wird von der Steuervorrichtung 30 zumindest ein Kommunikations-Parameter festgelegt.

Das technische Gerät 10 wird unter Verwendung des zumindest einen Kommunikations-Parameters gesteuert.

Dabei kann der zumindest eine Datenverkehrs-Parameter beispielsweise die minimale, die mittlere oder die maximale Übertragungsrate, oder die minimale, die mittlere oder die maximale Latenzzeit sein, oder auch eine Kombination daraus.

Vor dem Übertragen der Anwendungsdaten 21-24 zur Steuerung des technischen Geräts 10 wird ein Ausführungszeitpunkt und/oder eine Ausführungsdauer ermittelt.

Aus dem Ausführungszeitpunkt und/oder der Ausführungsdauer wird/werden der Startzeitpunkt und/oder die Dauer des Beobachtungszeitraums unter Anwendung des Prinzips des maschinellen Lernens ermittelt. Dadurch kann der Beobachtungszeitraum besonders geeignet gewählt werden, um eine optimale Übertragung der Anwendungsdaten zur Steuerung des technischen Geräts 10 zu erreichen.

Der zumindest eine Kommunikations-Parameter kann ein Prioritäts-Indikator für die Priorität des Datenpakets bei der Übertragung oder ein Protokoll-Indikator für die Art des Protokolls des Datenpakets bei der Übertragung, vorzugsweise TCP oder UDP, sein. Damit kann die Übertragungs-Priorität des Datenpakets, daß heißt der Anwendungsdaten 21-24, festgelegt werden.

Beispielsweise können systematische, zeitliche Engpässe bei der Übertragungsqualität vorab detektiert werden und einer unerwünschten Wirkung entgegengesteuert werden, wie durch Auswahl des TCP-IP-Protokolls oder alternativ des UDP-Protokolls für einzelne Daten oder Datenpakete 21-24 bei der Übertragung im Netzwerk 20.

Andererseits können Fehler im Netzwerk 20 erkannt werden, oder ungewöhnliches Verhalten im Netzwerk, beispielsweise bei einem Hacker-Angriff auf das Netzwerk 20 identifiziert werden und Gegenmaßnahmen ergriffen werden. So kann in einer Situation einer möglichen Hacker-Attacke beispielsweise bei der Übertragung sensibler Daten gezielt durch eine selektive Verwendung einer Verschlüsselung reagiert werden. Somit kann auf eine pauschale Verschlüsselung ohne Hacker-Verdachtsmoment verzichtet werden und die Effizienz des Systems verbessert werden.

### Bezugszeichenliste:

- 1: Cloud
- 10-14: IoT-Geräte, Datenkommunikationseinrichtungen
- 20: Netzwerk-Verbindung LAN, WAN
- 21-24: Anwendungsdaten
- 25: Datenverkehr
- 30: Steuervorrichtung
- 40: Überwachungsvorrichtung
- 41: Datenverkehrs-Parameter

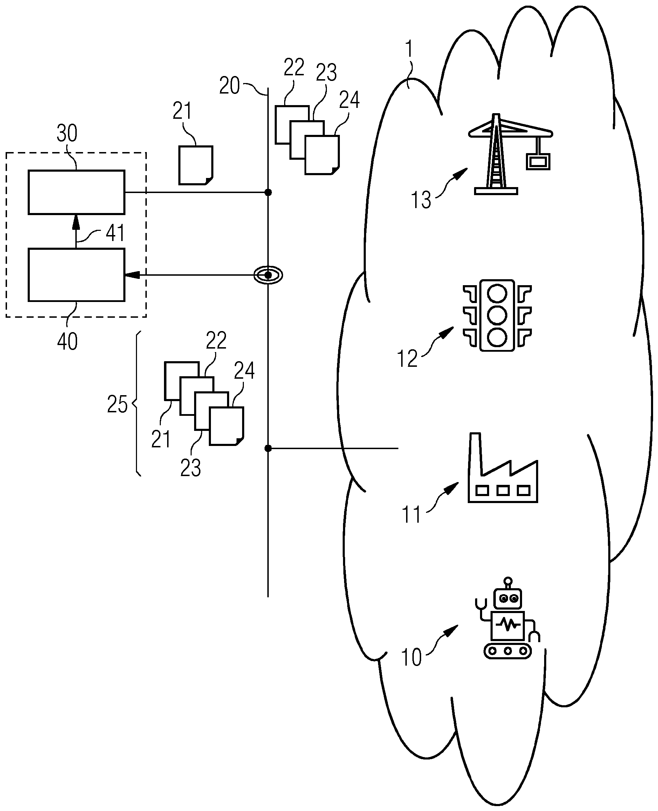

## Patentansprüche

1. Verfahren zur Steuerung eines technischen Geräts (10), welches über ein Netzwerk (20) mit einer Steuervorrichtung (30) verbunden ist,
wobei über das Netzwerk (20) Anwendungsdaten (21-24) zur Steuerung des technischen Geräts (10) und weiterer Datenkommunikationseinrichtungen (11-13) in Form von Datenverkehr (25) übertragen wird,
und der Datenverkehr (25) mittels zumindest einem Datenverkehrs-Parameter (41) über einen vorgegebenen Beobachtungszeitraum von einer Überwachungsvorrichtung (40) erfasst wird und der Steuervorrichtung (30) bereitgestellt wird,
und aus dem zumindest einen Datenverkehrs-Parameter (41) zumindest ein Kommunikations-Parameter von der Steuervorrichtung (30) festgelegt wird,
und das technische Gerät (10) unter Verwendung des zumindest einen Kommunikations-Parameters gesteuert wird.

2. Verfahren nach dem vorhergehenden Anspruch, wobei der zumindest eine Datenverkehrs-Parameter die minimale, die mittlere oder die maximale Übertragungsrate ist.

3. Verfahren nach einem der vorhergehenden Ansprüche, wobei der zumindest eine Datenverkehrs-Parameter die minimale, die mittlere oder die maximale Latenzzeit ist.

4. Verfahren nach einem der vorhergehenden Ansprüche, wobei vor dem Übertragen der Anwendungsdaten zur Steuerung des technischen Geräts ein Ausführungszeitpunkt und/oder eine Ausführungsdauer ermittelt werden,
und aus dem Ausführungszeitpunkt und/oder der Ausführungsdauer der Startzeitpunkt und/oder die Dauer des Beobachtungszeitraums unter Anwendung des Prinzips des maschinellen Lernens ermittelt wird.

5. Verfahren nach einem der vorhergehenden Ansprüche, wobei der zumindest eine Kommunikations-Parameter ein Prioritäts-Indikator für die Priorität des Datenpakets bei der Übertragung oder ein Protokoll-Indikator für die Art des Protokolls des Datenpakets bei der Übertragung, vorzugsweise TCP oder UDP, ist.

6. Verfahren nach einem der vorhergehenden Ansprüche, wobei der zumindest eine Kommunikations-Parameter eine Verschlüsselung des Datenpakets bei der Übertragung bewirkt.

7. Vorrichtung umfassend ein Netzwerk (20) und eine Steuervorrichtung (30) zur Steuerung eines technischen Geräts (10), welches über das Netzwerk (20) mit der Steuervorrichtung (30) verbindbar ist, ferner umfassend eine Überwachungsvorrichtung (40),
wobei das Netzwerk (20) dazu eingerichtet ist, Anwendungsdaten (21-24) zur Steuerung des technischen Geräts (10) und weiterer Datenkommunikationseinrichtungen (11-13) in Form von Datenverkehr (25) zu übertragen,
und die Überwachungsvorrichtung (40) dazu eingerichtet ist, den Datenverkehr (25) mittels zumindest einem Datenverkehrs-Parameter (41) über einen vorgegebenen Beobachtungszeitraum zu erfassen und der Steuervorrichtung (30) bereitzustellen, und die Steuervorrichtung (30) dazu eingerichtet ist, aus dem zumindest einen Datenverkehrs-Parameter (41) zumindest einen Kommunikations-Parameter festzulegen, sowie das Verfahren nach einem der vorhergehenden Ansprüche auszuführen und das technische Gerät unter Verwendung des zumindest einen Kommunikations-Parameters zu steuern.

8. Vorrichtung nach dem der vorhergehenden Anspruch, wobei das Netzwerk (20) ein LAN oder ein WAN ist.

9. Vorrichtung nach einem der beiden vorhergehenden Ansprüche, wobei das technische Gerät (10) und die weiteren Datenkommunikationseinrichtungen (11-13) IoT-Geräte oder IIoT-Geräte sind.

## Claims

1. Method for controlling a technical device (10) which is connected to a control apparatus (30) via a network (20), wherein application data (21-24) for controlling the technical device (10) and further data communication devices (11-13) are transmitted in the form of data traffic (25) via the network (20),
and the data traffic (25) is captured by a monitoring apparatus (40) over a predefined observation period by means of at least one data traffic parameter (41) and is made available to the control apparatus (30),
and at least one communication parameter is determined by the control apparatus (30) from the at least one data traffic parameter (41),
and the technical device (10) is controlled using the at least one communication parameter.

2. Method according to the preceding claim, wherein the at least one data traffic parameter is the minimum, average or maximum transmission rate.

3. Method according to one of the preceding claims, wherein the at least one data traffic parameter is the minimum, average or maximum latency.

4. Method according to one of the preceding claims, wherein an execution time and/or an execution duration is/are determined before transmitting the application data for controlling the technical device,
and the starting time and/or the duration of the observation period is/are determined from the execution time and/or the execution duration using the principle of machine learning.

5. Method according to one of the preceding claims, wherein the at least one communication parameter is a priority indicator for the priority of the data packet during transmission or a protocol indicator for the type of protocol of the data packet during transmission, preferably TCP or UDP.

6. Method according to one of the preceding claims, wherein the at least one communication parameter causes encryption of the data packet during transmission.

7. Apparatus comprising a network (20) and a control apparatus (30) for controlling a technical device (10) which can be connected to the control apparatus (30) via the network (20), also comprising a monitoring apparatus (40),
wherein the network (20) is configured to transmit application data (21-24) for controlling the technical device (10) and further data communication devices (11-13) in the form of data traffic (25),
and the monitoring apparatus (40) is configured to capture the data traffic (25) over a predefined observation period by means of at least one data traffic parameter (41) and to make the data traffic available to the control apparatus (30),
and the control apparatus (30) is configured to determine at least one communication parameter from the at least one data traffic parameter (41) and to carry out the method according to one of the preceding claims and to control the technical device using the at least one communication parameter.

8. Apparatus according to the preceding claim, wherein the network (20) is a LAN or WAN.

9. Apparatus according to one of the two preceding claims, wherein the technical device (10) and the further data communication devices (11-13) are IoT devices or IIoT devices.

## Revendications

1. Procédé de commande d'un appareil technique (10) qui est relié à un dispositif de commande (30) par l'intermédiaire d'un réseau (20),
dans lequel des données d'application (21 - 24), permettant de commander l'appareil technique (10), et des dispositifs de communication de données supplémentaires (11 - 13) sont transmises par l'intermédiaire du réseau (20) sous la forme d'un flux de données (25),
et le flux de données (25) est détecté au moyen d'au moins un paramètre de flux de données (41) sur une période d'observation prédéterminée par un dispositif de surveillance (40) et est fourni au dispositif de commande (30),
et au moins un paramètre de communication est défini par le dispositif de commande (30) à partir du au moins un paramètre de flux de données (41),
et l'appareil technique (10) est commandé à l'aide du au moins un paramètre de communication.

2. Procédé selon la revendication précédente, dans lequel le au moins un paramètre de flux de données est la vitesse de transmission minimale, moyenne ou maximale.

3. Procédé selon l'une quelconque des revendications précédentes, dans lequel le au moins un paramètre de flux de données est la période de latence minimale, moyenne ou maximale.

4. Procédé selon l'une des revendications précédentes, dans lequel, avant la transmission des données d'application pour la commande de l'appareil technique, un instant d'exécution et/ou une durée d'exécution est/sont déterminé(e)(s),
et l'instant de début et/ou la durée de la période d'observation est/sont déterminé(e)(s) à partir de l'instant d'exécution et/ou de la durée d'exécution en utilisant le principe de l'apprentissage machine.

5. Procédé selon l'une quelconque des revendications précédentes, dans lequel le au moins un paramètre de communication est un indicateur de priorité pour la priorité du paquet de données pendant la transmission ou un indicateur de protocole pour le type de protocole du paquet de données pendant la transmission, de préférence TCP ou UDP.

6. Procédé selon l'une quelconque des revendications précédentes, dans lequel le au moins un paramètre de communication effectue un cryptage du paquet de données pendant la transmission.

7. Dispositif comprenant un réseau (20) et un dispositif de commande (30) permettant de commander un appareil technique (10) qui peut être relié au dispositif de commande (30) par l'intermédiaire du réseau (20), comprenant en outre un dispositif de surveillance (40),
dans lequel le réseau (20) est configuré afin de transmettre des données d'application (21 - 24) permettant de commander l'appareil technique (10) et des dispositifs de communication de données supplémentaires (11 - 13) sous la forme d'un flux de données (25),
et le dispositif de surveillance (40) est configuré afin de détecter le flux de données (25) au moyen d'au moins un paramètre de trafic de données (41) sur une période d'observation prédéterminée et afin de le mettre à disposition du dispositif de commande (30), et le dispositif de commande (30) est configuré afin de définir au moins un paramètre de communication à partir du au moins un paramètre de trafic de données (41), et afin de mettre en œuvre le procédé selon l'une quelconque des revendications précédentes et afin de commander l'appareil technique en utilisant le au moins un paramètre de communication.

8. Appareil selon l'une quelconque des revendications précédentes, dans lequel le réseau (20) est un réseau local, LAN, ou un réseau étendu, WAN.

9. Dispositif selon l'une des deux revendications précédentes, dans lequel l'appareil technique (10) et les dispositifs de communication de données supplémentaires (11 - 13) sont des dispositifs IoT ou des dispositifs IIoT.
